# FASCICULE DE BREVET EUROPEEN

(11) **EP 2 751 637 B1**
(45) Date de publication et mention de la délivrance du brevet: **22.04.2020**
(21) Numéro de dépôt: 12756796.4
(22) Date de dépôt: 28.08.2012
(51) Int. Cl.: G06F 1/10, H04J 3/06

(54) **PROCÉDÉ DE SYNCHRONISATION D'UNE GRAPPE DE SERVEURS ET GRAPPE DE SERVEURS METTANT EN OEUVRE CE PROCÉDÉ.**
VERFAHREN ZUR SYNCHRONISATION EINES SERVERCLUSTERS UND DIESES VERFAHREN UMSETZENDER SERVERCLUSTER
METHOD FOR SYNCHRONISING A SERVER CLUSTER AND SERVER CLUSTER IMPLEMENTING SAID METHOD

(30) Priorité: 30.08.2011 FR 1157642
(43) Date de publication de la demande: 09.07.2014
(73) Titulaire: Bull S.A.S., 78340 Les Clayes-sous-Bois (FR)
(72) Inventeur: LECOURTIER, Georges, F-78000 Versailles (FR)
(74) Mandataire: Bonnet, Michel
(86) Numéro de dépôt international: PCT/FR2012/051945
(87) Numéro de publication internationale: WO 2013/030504

(56) Documents cités:
- US-A- 5 550 875
- US-A1- 2002 167 857
- US-A1- 2006 153 245
- US-B1- 6 696 875

## Description

La présente invention concerne un procédé de synchronisation d'une grappe de serveurs et une grappe de serveurs mettant en œuvre ce procédé.

Elle porte plus précisément sur une grappe de serveurs comportant une pluralité de nœuds munis chacun d'une horloge interne et interconnectés entre eux par un réseau d'interconnexion d'horloges, ce réseau d'interconnexion d'horloges comportant une pluralité de segments de transmission reliant les nœuds entre eux.

Une grappe de serveurs de ce type prend généralement la forme d'une installation informatique comprenant plusieurs ordinateurs en réseau, apparaissant de l'extérieur comme un calculateur à très forte puissance de calcul, dit calculateur à haute performance de traitement ou calculateur HPC (de l'Anglais « High Performance Computing »). Une telle installation optimisée permet la répartition de traitements complexes et/ou de calculs parallèles sur au moins une partie des nœuds de la grappe.

L'ensemble des ordinateurs/calculateurs de la grappe de serveurs, des modules de gestion des châssis dans lesquels ils sont généralement intégrés et des modules de gestion des baies informatiques dans lesquels ces châssis sont eux-mêmes généralement intégrés constitue l'ensemble des nœuds de cette grappe, sachant que l'on désigne par le terme de « noeud » un calculateur ou un module de gestion pouvant comporter une ou plusieurs unité(s) de traitement. On peut alors distinguer deux types de nœuds : les nœuds de calcul et les nœuds de service. Les nœuds de calcul sont ceux qui exécutent effectivement les différentes instructions de traitements complexes et/ou calculs parallèles, sous la supervision des nœuds de services.

Pour qu'une telle grappe de serveurs soit bien synchronisée, il est nécessaire que les horloges internes de chacun de ses nœuds soient à une même fréquence commune d'oscillation, mais cela ne suffit pas. Il faut également s'assurer qu'elles présentent toute une même information d'horodatage à chaque instant et le plus précisément possible.

Les nœuds d'une grappe de serveurs sont en général tous reliés à un même premier réseau de transmission de données par paquets, par exemple un réseau Ethernet pour l'administration générale de la grappe de serveurs. C'est par exemple entre autre par ce réseau que transitent des messages de notification d'événements tels que des notifications de pannes, d'erreurs ou autres alertes. Un serveur maître relié à ce réseau d'administration Ethernet, piloté par une horloge interne de référence, peut ainsi procéder à une synchronisation de l'ensemble des nœuds par diffusion, à l'aide du protocole NTP (de l'Anglais « Network Time Protocol »), d'une information d'horodatage à partir de sa référence. Cependant la transmission par ce réseau Ethernet n'est pas déterministe de sorte que le temps de transmission d'un nœud à l'autre peut être très variable et assez important. Par exemple, par NTP, il est difficile d'obtenir une transmission d'une information d'horodatage à chacun des nœuds avec une précision inférieure à une centaine de microsecondes.

Pour l'exécution de calculs complexes à grande vitesse, les nœuds d'une grappe de serveurs sont en outre généralement interconnectés entre eux par un deuxième réseau conçu pour la transmission de données de calcul des traitements complexes et/ou calculs parallèles. Ce réseau de gestion des données de calcul, utilisé pour l'exécution des calculs à grande vitesse à l'aide de plusieurs calculateurs sollicités en parallèle, est très performant en termes de vitesse de transmission puisque des données peuvent être ainsi transmises en moins d'une microseconde d'un nœud à l'autre de la grappe de serveurs. Cependant un tel réseau n'est généralement pas sollicité pour transmettre des informations d'horodatage puisqu'il est susceptible de se trouver régulièrement en situation d'engorgement lors de phases critiques de calcul.

Les nœuds d'une grappe de serveurs peuvent en outre être interconnectés entre eux par un ou plusieurs autres réseaux éventuellement dédiés à certaines tâches et indépendants des premier et deuxième réseaux.

Au moins l'un des réseaux reliant entre eux les nœuds de la grappe de serveurs, que ce soit le premier réseau d'administration générale, le deuxième réseau de gestion des données de calcul ou l'un des autres réseaux éventuels, comporte une pluralité de segments de transmission reliant chacun point à point deux éléments de la grappe de serveurs tels que deux rangées de baies informatiques, deux baies informatiques d'une même rangée, deux châssis d'une même baie ou deux calculateurs d'un même châssis et est avantageusement utilisé pour la transmission de l'information d'horodatage en vue d'une synchronisation des nœuds de la grappe de serveurs. C'est ce réseau qui est qualifié de réseau d'interconnexion d'horloges.

Par ailleurs, chaque message transitant par l'un de ces réseaux, notamment chaque message de notification, comporte une information d'horodatage (instant d'émission) fournie par l'horloge interne du nœud qui l'émet, la résolution de cette information d'horodatage pouvant être inférieure à 100 ns.

Cependant, compte tenu du nombre de tels messages pouvant être émis quasi simultanément par plusieurs nœuds et de l'importance d'une bonne connaissance de la succession de ces messages pour résoudre les éventuels problèmes détectés ou pour le débogage, au vu en outre des performances précitées du premier réseau d'administration générale, la cohérence entre les horloges internes des nœuds de la grappe de serveurs devient un problème majeur lorsque celle-ci ne peut être assurée que par le premier réseau. Il conviendrait en effet de pouvoir assurer une précision largement inférieure à une dizaine de microsecondes, voire même à quelques fractions de microsecondes, dans la transmission de l'information commune d'horodatage à l'ensemble des nœuds.

Il est donc avantageux de transmettre cette information d'horodatage par le réseau d'interconnexion d'horloges, qu'il soit indépendant ou non des premier ou deuxième réseaux, et de procéder de la façon suivante :
- génération d'une information d'horodatage par l'horloge interne d'une source choisie parmi les nœuds de la grappe de serveurs,
- transmission, par les segments de transmission du réseau d'interconnexion d'horloges, de cette information d'horodatage à l'ensemble des nœuds de la grappe de serveurs à partir de la source, et
- réglage de l'horloge interne de chaque nœud de la grappe de serveurs à partir de cette information d'horodatage.

Pour éviter tout décalage dans la réception de l'information d'horodatage d'un nœud à l'autre, la solution la plus immédiate et la plus simple techniquement est de concevoir le réseau d'interconnexion d'horloges autour de ladite source, chaque nœud étant directement relié à la source par un segment de transmission et tous les segments de transmission étant identiques, notamment de même longueur. Evidemment, cette solution n'est pas envisageable en pratique, compte tenu de la configuration classique des grappes de serveurs en rangées de baies informatiques ainsi que des dispersions de temps de propagation dans les composants d'entrée/sortie des segments de transmission.

D'autres solutions peuvent être envisagées sur la base de fonctionnalités telles que proposées par les protocoles émergents IEEE 1588 PTP ou IEEE 802.3 EtherCAT pour corriger l'information d'horodatage reçue par chaque nœud en fonction d'une estimation du temps mis par cette information pour lui parvenir depuis la source. Mais ces solutions mettent en oeuvre une méthodologie assez complexe.

Il peut ainsi être souhaité de prévoir un procédé de synchronisation d'une grappe de serveurs qui permette de s'affranchir d'au moins une partie des problèmes et contraintes précités, notamment qui permette une cohérence suffisamment précise des horloges internes des différents nœuds de la grappe de serveurs tout en restant relativement simple à mettre en œuvre.

L'invention a donc pour objet un procédé de synchronisation d'une grappe de serveurs comportant une pluralité de nœuds munis chacun d'une horloge interne et interconnectés entre eux par un réseau d'interconnexion d'horloges, ce réseau d'interconnexion d'horloges comportant une pluralité de segments de transmission reliant les nœuds entre eux, le procédé comportant les étapes suivantes :
- génération d'une information d'horodatage par l'horloge interne d'une source choisie parmi les nœuds de la grappe de serveurs,
- transmission, par les segments de transmission du réseau d'interconnexion d'horloges, de cette information d'horodatage à l'ensemble des nœuds de la grappe de serveurs à partir de la source,
- réglage de l'horloge interne de chaque nœud de la grappe de serveurs à partir de cette information d'horodatage,
caractérisé en ce qu'il comporte en outre les étapes suivantes :
- réglage du temps de transmission de l'information d'horodatage par chaque segment de transmission à une valeur constante établie pour chaque segment de transmission,
- à réception de l'information d'horodatage par l'un quelconque des nœuds de la grappe de serveurs, réglage de son horloge interne à partir de l'information d'horodatage et d'une information relative aux segments de transmission traversés entre la source et ce nœud.

Ainsi, même si les nœuds ne reçoivent pas tous au même moment l'information d'horodatage, il est possible pour chaque nœud grâce à l'invention de déterminer précisément le temps mis par cette information pour lui parvenir à partir de la source, de sorte qu'il devient possible d'en tenir compte dans la mise à l'heure de son horloge interne par rapport à celle de la source. Toutes les horloges internes peuvent alors être réglées à la même heure avec une très bonne précision.

De façon optionnelle, le réglage du temps de transmission de l'un quelconque des segments de transmission est réalisé à l'aide d'au moins une ligne à retard réglée pour aligner la phase d'un signal porteur de l'information d'horodatage sur la phase d'un signal de référence interne aux nœuds oscillant à une fréquence correspondant à une fréquence d'oscillation commune de toutes les horloges internes des nœuds de la grappe de serveurs.

De façon optionnelle également, le réglage du temps de transmission de l'un quelconque des segments de transmission est réalisé à l'aide de deux lignes à retard asservies en fonction d'un déphasage mesuré entre une trame de données, destinée à être fournie en entrée de l'une des deux lignes à retard dans le sens de transmission de l'information d'horodatage, et un écho de cette trame de données, fourni en sortie de l'autre des deux lignes à retard dans le sens inverse de transmission de l'information d'horodatage.

De façon optionnelle également, les valeurs d'asservissement des deux lignes à retard de l'un quelconque des segments de transmission sont déterminées différemment l'une de l'autre en fonction, en outre, d'un déphasage mesuré en sortie de ce segment de transmission dans le sens de transmission de l'information d'horodatage entre la trame de données fournie en sortie de l'une des deux lignes à retard et une référence locale de phase prédéterminée.

De façon optionnelle également, la valeur du temps de transmission établie pour chaque segment de transmission est une même valeur maximale commune établie pour tous les segments de transmission.

De façon optionnelle également, ladite même valeur maximale commune établie pour tous les segments de transmission est obtenue par un réglage des lignes à retard tel que la phase d'un signal porteur de l'information d'horodatage est alignée sur les fronts montants ou descendants du signal de référence, ce dernier oscillant autour d'une fréquence intermédiaire, par exemple 1 MHz.

De façon optionnelle également, l'information relative aux segments de transmission traversés entre la source et l'un quelconque des nœuds de la grappe de serveurs pour la transmission de l'information d'horodatage comporte le nombre de segments de transmission traversés entre la source et ce nœud.

De façon optionnelle également, une pluralité de nœuds, dits nœuds de calcul, est apte à exécuter des instructions de programmes d'application et des instructions de système d'exploitation, chacun de ces nœuds de calcul étant programmé pour exécuter les instructions de système d'exploitation dans des fenêtres temporelles prédéterminées, le déclenchement de ces exécutions dans ces fenêtres temporelles prédéterminées étant réalisé par l'horloge interne de chaque nœud de calcul.

De façon optionnelle également, les fenêtres temporelles prédéterminées sont les mêmes pour tous les nœuds de calcul.

L'invention a également pour objet une grappe de serveurs comportant une pluralité de nœuds munis chacun d'une horloge interne et interconnectés entre eux par un réseau d'interconnexion d'horloges, ce réseau d'interconnexion d'horloges comportant une pluralité de segments de transmission reliant les nœuds entre eux, la grappe de serveurs comportant :
- une source, choisie parmi les nœuds de la grappe de serveurs, comportant des moyens de génération d'une information d'horodatage à l'aide de son horloge interne,
- des moyens de transmission, par les segments de transmission du réseau d'interconnexion d'horloges, de cette information d'horodatage à l'ensemble des nœuds de la grappe de serveurs à partir de la source,
- des moyens de réglage de l'horloge interne de chaque nœud de la grappe de serveurs à partir de cette information d'horodatage,
caractérisée en ce qu'elle comporte en outre des moyens de réglage du temps de transmission de l'information d'horodatage par chaque segment de transmission à une valeur constante établie pour chaque segment de transmission, et en ce que les moyens de réglage d'horloge interne sont conçus pour régler l'horloge interne de chaque nœud de la grappe de serveurs à partir en outre d'une information relative aux segments de transmission traversés entre la source et ce nœud.

De façon optionnelle :
- chaque nœud est inclus dans un châssis, lui-même inclus dans une baie informatique, elle-même incluse dans une rangée de baies informatiques, la grappe de serveur comportant une pluralité de rangées de baies informatiques,
- le réseau d'interconnexion d'horloges comporte une pluralité de segments d'interconnexion des rangées entre elles, de segments d'interconnexion de baies informatiques d'une même rangée entre elles, de segments d'interconnexion de châssis d'une même baie informatique entre eux et de segments d'interconnexion de nœuds d'un même châssis entre eux, et
- les moyens de transmission de l'information d'horodatage sont aptes à transmettre à chaque nœud de la grappe de serveurs, avec cette information d'horodatage, au moins une information relative au nombre de segments d'interconnexion de rangées traversés entre la source et ce nœud, au nombre de segments d'interconnexion de baies informatiques traversés entre la source et ce nœud et au nombre de segments d'interconnexion de châssis traversés entre la source et ce nœud.

De façon optionnelle également, l'information relative aux segments de transmission traversés entre la source et l'un quelconque des nœuds de la grappe de serveurs comportant au moins un champ d'indication du nombre de segments d'interconnexion de rangées traversés entre la source et ce nœud, un champ d'indication du nombre de segments d'interconnexion de baies informatiques traversés entre la source et ce nœud et un champ d'indication du nombre de segments d'interconnexion de châssis traversés entre la source et ce nœud, des moyens d'incrémentation sont prévus pour l'incrémentation de chacun de ces champs dès qu'un segment correspondant est traversé par un message incluant l'information d'horodatage destinée à ce nœud.

De façon optionnelle également, la grappe de serveurs comportant :
- un premier réseau d'administration générale interconnectant tous les nœuds entre eux, et
- au moins un second réseau de gestion de données de calcul destinées à être échangées entre les nœuds, interconnectant au moins une partie des nœuds entre eux,
ledit réseau d'interconnexion d'horloges est un réseau supplémentaire, distinct du réseau d'administration générale et du réseau de gestion de données de calcul, notamment un réseau mettant en œuvre le protocole HDLC.

L'invention sera mieux comprise à l'aide de la description qui va suivre, donnée uniquement à titre d'exemple et faite en se référant aux dessins annexés dans lesquels :
- la figure 1 représente schématiquement la structure générale d'une grappe de serveurs selon un mode de réalisation de l'invention,
- la figure 2 détaille schématiquement la structure générale d'une baie informatique de la grappe de serveurs de la figure 1,
- les figures 3 et 4 représentent schématiquement deux modes de réalisation de segments de transmission de la grappe de serveurs de la figure 1,
- la figure 5 illustre les étapes successives d'un procédé de synchronisation de la grappe de serveurs de la figure 1, et
- la figure 6 illustre, à l'aide d'une succession d'étapes, un principe de fonctionnement général de la grappe de serveurs de la figure 1.

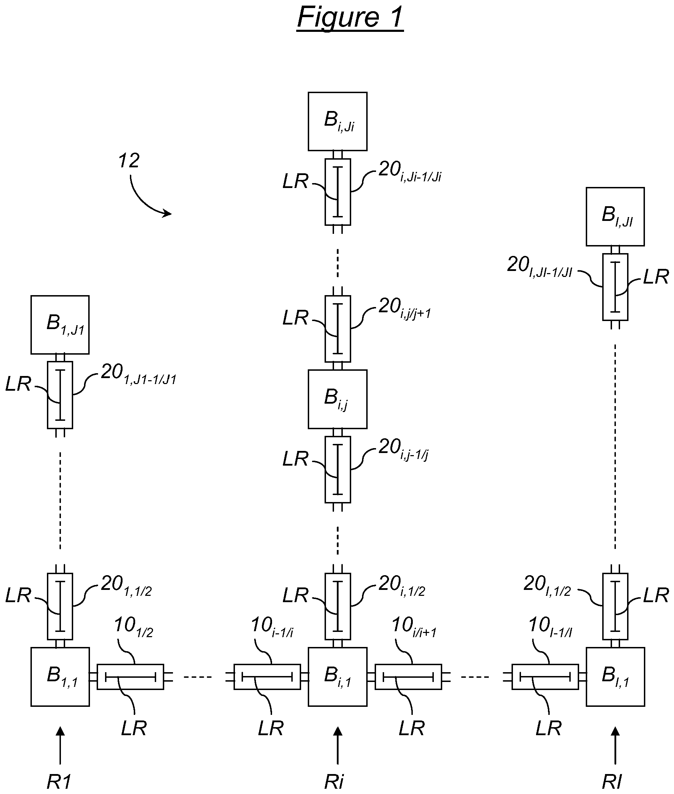

La grappe de serveurs 12 illustrée sur la figure 1 comporte une pluralité de baies informatiques notées B_{i,j} en fonction de leur position. Cette grappe de serveurs est par exemple organisée en plusieurs rangées R1, ..., Ri, ... RI, chacune de ces rangées comportant au moins une baie informatique. On notera que le nombre de baies par rangée n'est pas nécessairement identique d'une rangée à l'autre. Ainsi, dans l'exemple illustré sur la figure 1, la première rangée de baies R1 comporte J1 baies informatiques notées B_{1,1}, ..., B_{1,J1}, la i-ème rangée Ri comporte Ji baies informatiques notées B_{i,1}, ..., B_{i,Ji} et la dernière rangée de baies RI comporte JI baies informatiques notées B_{l,1}, ..., B_{l,Jl}. En particulier, la j-ème baie informatique de la i-ème rangée Ri est notée B_{i,j}.

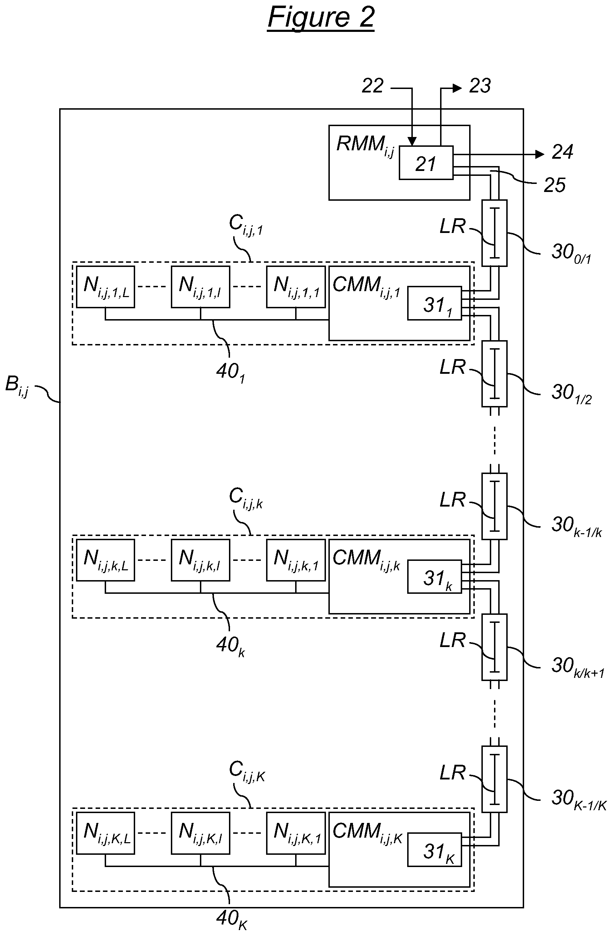

Comme cela sera par ailleurs détaillé en référence à la figure 2, chaque baie informatique comporte elle-même au moins un châssis, chaque châssis de chaque baie informatique comportant lui-même au moins un calculateur, c'est-à-dire un noeud de calcul. Un tel calculateur est, comme déjà indiqué précédemment, un nœud de la grappe de serveurs 12 et comporte une ou plusieurs unité(s) de traitement. Il comporte en outre de façon connue en soi une horloge interne permettant de cadencer ses traitements en mode plésiochrone. Selon cette architecture classique, chaque nœud de la grappe de serveurs 12 est donc inclus dans un châssis, lui-même inclus dans une baie informatique, elle-même incluse dans l'une des rangées R1, ..., Ri, ... RI.

La grappe de serveurs 12 est destinée à être raccordée à un réseau dorsal (non représenté) généralement appelé réseau backbone (de l'Anglais « backbone network ») et elle apparaît ainsi de l'extérieur, c'est à dire du point de vue d'un terminal de commande relié également au réseau backbone, comme une entité unique de calculateur HPC.

Certains des nœuds de la grappe de serveurs 12 sont des nœuds de service, par exemple les modules de gestion de châssis et les modules de gestion de baies informatiques. Certains calculateurs dédiés de la grappe de serveurs en font également partie : par exemple une interface de traitement, dite interface Login, un serveur d'administration générale, un serveur de gestion de données descriptives de la grappe, un serveur de gestion des entrées/sorties et un serveur de sauvegarde. La plupart de ces calculateurs dédiés sont dupliqués pour des raisons de sécurité. Les autres nœuds de la grappe de serveurs 12 sont des nœuds de calcul dont l'activité est gérée notamment par le serveur d'administration générale.

Les différents nœuds précités de la grappe de serveurs 12 sont interconnectés entre eux à l'aide de plusieurs réseaux.

De façon optionnelle, un ou plusieurs réseaux de service (non illustrés) peuvent relier spécifiquement des serveurs de calcul rapide entre eux pour constituer un ou plusieurs sous-réseaux dans lesquels les transferts de données de service sont accélérés. Ils peuvent prendre la forme de réseaux en bus, en anneau, maillés ou selon d'autres topologies connues.

Par ailleurs, un réseau d'administration (non illustré), en général de type Ethernet, permet de relier le serveur d'administration générale de la grappe de serveurs 12 à tous les autres nœuds. De façon optionnelle, ce réseau d'administration générale peut être doublé d'un réseau de contrôle primaire dédié à la mise sous tension, au démarrage, à l'arrêt et au traitement de certaines erreurs primaires prédéterminées, dites erreurs fatales et générant des fichiers Core, des serveurs qu'il administre. Un tel réseau d'administration générale présente par exemple un débit de l'ordre de 100 Mbits/s.

Enfin, un ou plusieurs autres réseaux, dits réseaux de gestion de données de calcul, relient entre eux au moins tous les nœuds de calcul, voire tous les nœuds de calcul et de service, de la grappe de serveurs 12. Ils ont des caractéristiques de débit très élevées par rapport aux caractéristiques de débit du réseau d'administration. C'est en effet par ce(s) réseau(x) de gestion de données de calcul que transitent entre autres les données de calcul nécessaires à l'exécution des instructions de traitement transmises à la grappe de serveurs 12. Ils peuvent prendre la forme de réseaux en arbre (de type tree ou fat-tree), en anneau, maillés ou selon d'autres topologies connues. De tels réseaux de gestion de données de calcul présentent par exemple un débit de l'ordre de 40 Gbits/s.

Comme indiqué précédemment, au moins l'un des réseaux reliant les nœuds de la grappe de serveurs, que ce soit le ou les réseaux de service, le réseau d'administration, le ou les réseaux de gestion de données de calcul, ou un éventuel autre réseau dédié, comporte une pluralité de segments de transmission reliant chacun point à point deux éléments de la grappe de serveurs tels que deux rangées de baies informatiques, deux baies informatiques d'une même rangée, deux châssis d'une même baie ou deux calculateurs d'un même châssis. Ce réseau est, dans la suite de la description, qualifié de réseau d'interconnexion d'horloges et va être utilisé avantageusement pour la transmission synchronisée d'informations d'horodatage. Il met par exemple en oeuvre le protocole HDLC pour la transmission des informations d'horodatage. S'il s'agit d'un réseau dédié différent des réseau d'administration générale et réseaux de gestion de données de calcul, il peut par exemple présenter un débit de l'ordre de 1 Mbits/s.

A un premier niveau illustré sur la figure 1, et à titre d'exemple non limitatif, le réseau d'interconnexion d'horloges comporte une pluralité de segments de transmission 10_{1/2}, ..., 10_{i-1/i}, 10_{i/i+1}, ..., 10_{l-1/l} pour une interconnexion des rangées R1, ..., Ri, ... RI entre elles deux à deux : plus précisément, le segment 10_{1/2} relie les rangées R1 et R2 entre elles par leurs premières baies B_{1,1} et B_{2,1}, ... le segment 10_{i-1/i} relie les rangées Ri-1 et Ri entre elles par leurs premières baies B_{i-1,1} et B_{i,1}, le segment 10_{i/i+1} relie les rangées Ri et Ri+1 entre elles par leurs premières baies B_{i,1} et B_{i+1,1}, ... et le segment 10_{l-1/l} relie les rangées RI-1 et RI entre elles par leurs premières baies B_{l-1,1} et B_{l,1}.

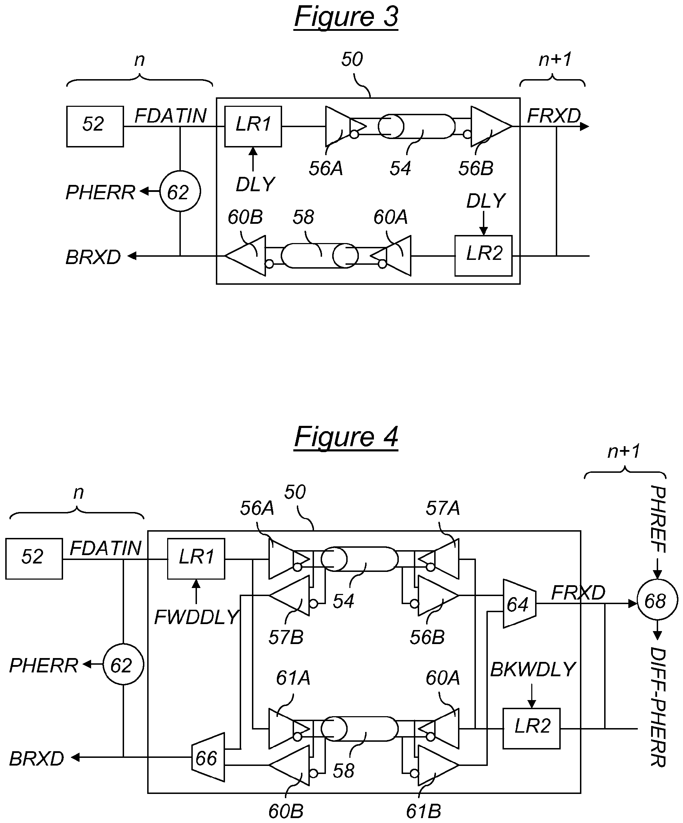

Les segments de transmission 10_{1/2}, ..., 10_{i-1/i}, 10_{i/i+1}, ..., 10_{l-1/l} comportent par exemple des câbles d'environ 10 mètres chacun qui sont susceptibles a priori de transmettre des données dans un sens ou dans l'autre selon des temps de transmission différents les uns des autres et différents d'un sens de transmission à l'autre : ces temps de transmission sont généralement inférieurs à 100 ns pour ces câbles de 10 mètres. Les segments de transmission 10_{1/2}, ..., 10_{i-1/i}, 10_{i/i+1}, ..., 10_{l-1/l} comportent en outre des moyens LR de réglage de leur temps de transmission à une valeur constante établie pour chaque segment de transmission. Ces moyens de réglage LR comportent par exemple des lignes à retard : une ligne à retard est en effet un dispositif électronique dans lequel un signal passe de l'entrée à la sortie en une période de temps définie à l'avance. Cette période de temps peut être commune à toutes les lignes à retard. L'un quelconque des segments de transmission 10_{1/2}, ..., 10_{i-1/i}, 10_{i/i+1}, ..., 10_{l-1/l}, muni de ces moyens de réglage LR, sera détaillé en référence aux figures 3 et 4.

A un deuxième niveau illustré sur la figure 1, et à titre d'exemple non limitatif, le réseau d'interconnexion d'horloges comporte en outre une pluralité de segments de transmission 20_{1,1/2}, ..., 20_{1,J1-1/J1} pour une interconnexion des baies informatiques de la première rangée R1 entre elles deux à deux, ... une pluralité de segments de transmission 20_{i,1/2}, ..., 20_{i,Ji-1/Ji} pour une interconnexion des baies informatiques de la i-ème rangée Ri entre elles deux à deux, ... et une pluralité de segments de transmission 20_{l,1/2}, ..., 20_{l,Jl-1/Jl} pour une interconnexion des baies informatiques de la dernière rangée RI entre elles deux à deux : plus précisément, le segment 20_{1,1/2} relie les baies informatiques B_{1,1} et B_{1,2} entre elles, ... le segment 20_{1,J1-1/J1} relie les baies informatiques B_{1,J1-1} et B_{1,J1} entre elles, le segment 20_{i,1/2} relie les baies informatiques B_{i,1} et B_{i,2} entre elles, ... le segment 20_{i,j-1/j} relie les baies informatiques B_{i,j-1} et B_{1,j} entre elles, le segment 20_{i,j/j+1} relie les baies informatiques B_{i,j} et B_{1,j+1} entre elles, ... le segment 20_{i,Ji-1/Ji} relie les baies informatiques B_{i,Ji-1} et B_{1,Ji} entre elles, le segment 20_{l,1/2} relie les baies informatiques B_{l,1} et B_{l,2} entre elles, ... et le segment 20_{l,Jl-1/Jl} relie les baies informatiques B_{l,Jl-1} et B_{l,Jl} entre elles.

Les segments de transmission 20_{1,1/2}, ..., 20_{1,J1-1/J1}, ... 20_{i,1/2}, ..., 20_{i,Ji-1/Ji}, 20_{l,1/2}, ..., 20_{l,Jl-1/Jl} comportent par exemple des câbles d'environ 1 mètre chacun qui sont susceptibles a priori de transmettre des données selon des temps de transmission différents les uns des autres et différents d'un sens de transmission à l'autre : ces temps de transmission sont généralement de 5 à 10 ns pour ces câbles de 1 mètre. Les segments de transmission 20_{1,1/2}, ..., 20_{1,J1-1/J1}, ... 20_{i,1/2}, ..., 20_{i,Ji-1/Ji}, 20_{l,1/2}, ..., 20_{l,Jl-1/Jl} comportent en outre des moyens LR de réglage de leur temps de transmission à une valeur constante établie pour chaque segment de transmission. Ces moyens de réglage LR comportent par exemple des lignes à retard.

Les lignes à retard des segments de premier et deuxième niveaux peuvent être réglées pour aligner les phases des signaux qui les traversent, notamment les phases de signaux porteurs d'informations d'horodatage, sur des phases de signaux de référence internes aux nœuds oscillant à une même fréquence, cette fréquence correspondant par exemple à une fréquence d'oscillation commune de toutes les horloges internes des nœuds de la grappe de serveurs. Cette fréquence commune d'oscillation est par exemple centrée sur 1 MHz. Dans ce cas les lignes à retard peuvent être réglées pour aligner les phases des signaux porteurs d'informations d'horodatage sur les fronts montants ou descendants des signaux de référence qui sont séparés de 1 µs (c'est-à-dire 500 ns - 0,5 UI, de l'anglais « Unit Interval » pour la durée d'un bit - dans les câbles et les lignes à retard, et 500 ns - 0,5 UI - dans les circuits logiques programmables aux extrémités de ces câbles). Comme cette microseconde est largement supérieure aux différents temps de transmission possibles des segments de transmission de premier et deuxième niveaux, il devient possible d'imposer, grâce aux lignes à retard, une même valeur maximale commune (i.e. 1 µs) de transmission de tous les segments de premier et deuxième niveaux. Ainsi, la conception des moyens de réglage LR des segments de transmission 20_{1,1/2}, ..., 20_{1,J1-1/J1}, ... 20_{i,1/2}, ..., 20_{i,Ji-1/Ji}, 20_{l,1/2}, ..., 20_{l,Jl-1/Jl} peut être identique à celle des segments de transmission de premier niveau, comme cela sera détaillé en référence aux figures 3 et 4.

La structure de la grappe de serveurs 12, telle que décrite précédemment en référence à la figure 1, est appropriée pour la mise en oeuvre de l'invention, mais d'autres configurations possibles de grappes, notamment de type calculateur HPC, comprenant tout ou partie des éléments précités, voire comprenant d'autres éléments en cas de plus grande complexité et interconnectés différemment, conviennent aussi.

La figure 2 illustre en détail la structure générale de l'une quelconque des baies informatiques de la figure 1, notée B_{i,j}.

Cette baie informatique B_{i,j} comporte un module RMM_{i,j} de gestion de baie. Elle comporte en outre une pluralité de châssis C_{i,j,1}, ..., C_{i,j,k}, ... C_{i,j,K} superposés. Chaque châssis comporte son propre module CMM_{i,j,1}, ..., CMM_{i,j,k}, ... CMM_{i,j,K} de gestion de châssis et une pluralité de calculateurs formant les nœuds de la grappe de serveurs 12. Pour simplifier les notations, il est considéré, dans l'exemple de la figure 2, que tous les châssis de la baie informatique B_{i,j} comportent un même nombre L de nœuds, mais dans la réalité, ce nombre peut tout à fait être différent d'un châssis à l'autre et d'une baie à l'autre. Ainsi, conformément à ce qui est illustré, le châssis C_{i,j,1} comporte L nœuds N_{i,j,1,1}, ..., N_{i,j,1,l}, ... N_{i,j,1,L}, le châssis C_{i,j,k} comporte L nœuds N_{i,j,k,1}, ..., N_{i,j,k,l}, ... N_{i,j,k,L} et le châssis C_{i,j,K} comporte L nœuds N_{i,j,K,1}, ..., N_{i,j,K,l}, ... N_{i,j,K,L}.

Le module RMM_{i,j} de gestion de baie comporte un circuit logique programmable 21 permettant l'échange de données entre la baie informatique B_{i,j} et d'autres baies de la grappe de serveurs 12 par le réseau d'interconnexion d'horloges. Ce circuit logique 21 comporte fonctionnellement d'une façon générale une entrée 22 et trois sorties 23, 24 et 25.

L'entrée 22 est conçue pour raccorder le module de gestion RMM_{i,j} de la baie B_{i,j} au module de gestion d'une autre baie de la grappe de serveurs considérée comme située en amont de la baie B_{i,j} dans le sens d'une diffusion d'une information d'horodatage dans la grappe de serveurs. Selon l'installation illustrée sur la figure 1 et en choisissant arbitrairement la baie informatique B_{1,1} comme source de génération et de diffusion d'une telle information d'horodatage, la baie située en amont de la baie informatique B_{i,j} est B_{i-1,1} si j = 1 (c'est-à-dire lorsque l'on se trouve en tête de rangée) et B_{i,j-1} si j > 1. Par conséquent, l'entrée 22 est conçue pour raccorder le module de gestion RMM_{i,j} de la baie B_{i,j} au module de gestion RMM_{i-1,1} de la baie B_{i-1,1} si j = 1 et au module de gestion RMM_{i,j-1} de la baie B_{i,j-1} si j > 1.

La sortie 23 est conçue pour raccorder le module de gestion RMM_{i,j} de la baie B_{i,j} au module de gestion d'une autre baie de la grappe de serveurs considérée comme située en aval de la baie B_{i,j} dans le sens de diffusion d'une information d'horodatage dans la grappe de serveurs. Si une telle baie existe, et conformément aux sens de diffusion choisi, la sortie 23 relie le module de gestion RMM_{i,j} de la baie B_{i,j} au module de gestion RMM_{i,j+1} de la baie B_{i,j+1}.

La sortie 24 est utile aux premières baies B_{i,1} de chaque rangée Ri, pour tout i < l. Elle est conçue pour raccorder le module de gestion RMM_{i,1} de la baie B_{i,1} au module de gestion RMM_{i+1,1} de la baie B_{i+1,1}, considéré comme situé en aval dans le sens de diffusion de l'exemple de la figure 1.

Enfin, la sortie 25 permet, à un troisième niveau du réseau d'interconnexion d'horloges, de raccorder le module de gestion RMM_{i,j} de la baie B_{i,j} aux châssis C_{i,j,1}, ..., C_{i,j,k}, ... C_{i,j,K} de cette même baie. A ce troisième niveau illustré sur la figure 2, et à titre d'exemple non limitatif, le réseau d'interconnexion d'horloges comporte une pluralité de segments de transmission 30_{0/1}, 30_{1/2}, ..., 30_{k-1/k}, 30_{k/k+1}, ..., 30_{K-1/K} pour une interconnexion des châssis C_{i,j,1}, ..., C_{i,j,k}, ... C_{i,j,K} entre eux deux à deux et leur raccordement au module de gestion RMM_{i,j} : plus précisément, le segment 30_{0/1} relie le module de gestion RMM_{i,j} de la baie B_{i,j} au module de gestion CMM_{i,j,1} du châssis C_{i,j,1}, le segment 30_{1/2} relie le module de gestion CMM_{i,j,1} du châssis C_{i,j,1} au module de gestion CMM_{i,j,2} du châssis C_{i,j,2}, ... le segment 30_{k-1/k} relie le module de gestion CMM_{i,j,k-1} du châssis C_{i,j,k-1} au module de gestion CMM_{i,j,k} du châssis C_{i,j,k}, le segment 30_{k/k+1} relie le module de gestion CMM_{i,j,k} du châssis C_{i,j,k} au module de gestion CMM_{i,j,k+1} du châssis C_{i,j,k+1}, ... et le segment 30_{K-1/K} relie le module de gestion CMM_{i,j,K-1} du châssis C_{i,j,K-1} au module de gestion CMM_{i,j,K} du châssis C_{i,j,K}. Concrètement, le module de gestion CMM_{i,j,k} de chaque châssis C_{i,j,k} comporte un circuit logique programmable 31ₖ comportant fonctionnellement une entrée connectée au segment de transmission 30_{k-1/k} et une sortie connectée (sauf pour CMM_{i,j,K}) au segment de transmission 30_{k/k+1}.

Les segments de transmission 30_{0/1}, 30_{1/2}, ..., 30_{k-1/k}, 30_{k/k+1}, ..., 30_{K-1/K} comportent par exemple des câbles d'environ 50 centimètres chacun qui sont susceptibles a priori de transmettre des données selon des temps de transmission différents les uns des autres et différents d'un sens de transmission à l'autre : ces temps de transmission sont généralement de 2,5 à 5 ns pour ces câbles de 50 centimètres. Les segments de transmission 30_{0/1}, 30_{1/2}, ..., 30_{k-1/k}, 30_{k/k+1}, ..., 30_{K-1/K} comportent en outre des moyens LR de réglage de leur temps de transmission à une valeur constante établie pour chaque segment de transmission. Ces moyens de réglage LR comportent par exemple des lignes à retard.

Les lignes à retard des segments de troisième niveau peuvent être réglées elles aussi pour aligner les phases des signaux porteurs d'informations d'horodatage sur les phases de signaux de référence internes aux nœuds oscillant à une même fréquence, cette fréquence correspondant par exemple à la fréquence d'oscillation commune de toutes les horloges internes des nœuds de la grappe de serveurs, imposant, comme pour les segments de premier et deuxième niveaux, une même valeur maximale commune (i.e. 1 µs) de transmission de chaque segment de troisième niveau. Ainsi, la conception des moyens de réglage LR des segments de transmission 30_{0/1}, 30_{1/2}, ..., 30_{k-1/k}, 30_{k/k+1}, ..., 30_{K-1/K} peut être identique à celle des segments de transmission de premier et second niveaux, comme cela sera détaillé en référence aux figures 3 et 4.

A un quatrième niveau illustré sur la figure 2, et à titre d'exemple non limitatif, le réseau d'interconnexion d'horloges comporte une pluralité de segments de transmission 40₁, ..., 40ₖ, ..., 40_{K} pour une interconnexion des calculateurs de chaque châssis entre eux et leur raccordement au module de gestion CMM_{i,j,k} du châssis concerné : plus précisément, le segment 40₁ est par exemple un bus multipoints de fond de panier informatique qui relie le module de gestion CMM_{i,j,1} du châssis C_{i,j,1} à tous les calculateurs N_{i,j,1,1}, ..., N_{i,j,1,l}, ... N_{i,j,1,L}, ... le segment 40ₖ est par exemple un bus multipoints de fond de panier informatique qui relie le module de gestion CMM_{i,j,k} du châssis C_{i,j,k} à tous les calculateurs N_{i,j,k,1}, ..., N_{i,j,k,l}, ... N_{i,j,k,L}, ... et le segment 40_{K} est par exemple un bus multipoints de fond de panier informatique qui relie le module de gestion CMM_{i,j,K} du châssis C_{i,j,K} à tous les calculateurs N_{i,j,K,1}, ..., N_{i,j,K,l}, ... N_{i,j,K,L}.

Les bus multipoints 40₁, ..., 40ₖ, ..., 40_{K} sont par exemple chacun susceptibles a priori de transmettre des données à l'ensemble des nœuds auxquels ils sont raccordés en moins de 2 ou 3 ns. Ainsi, conformément au niveau de précision requis pour une synchronisation convenable dans la plupart des applications envisageables de l'invention, ce temps de transmission peut être négligé. En variante, il pourrait être a priori fixé à des valeurs prédéterminées équiréparties entre 0 et 2 à 3 ns pour chaque nœud.

En variante également, les bus multipoints 40₁, ..., 40ₖ, ..., 40_{K} pourraient être remplacés par une succession de câbles munis chacun de moyens LR de réglage de leur temps de transmission à une valeur constante. On se ramènerait ainsi à la situation des segments de transmission de premier, deuxième et troisième niveaux.

La structure de la baie informatique B_{i,j}, telle que décrite précédemment en référence à la figure 2, est appropriée pour la mise en oeuvre de l'invention, mais d'autres configurations possibles de baies comprenant tout ou partie des éléments précités, voire comprenant d'autres éléments en cas de plus grande complexité et interconnectés différemment, conviennent aussi.

Comme illustré sur la figure 3, l'un quelconque des segments de transmission de premier, deuxième ou troisième niveau du réseau d'interconnexion d'horloges, désigné par la référence générale 50, peut être conçu à l'aide de lignes à retard pour imposer un temps de transmission constant. Ce segment de transmission 50 relie deux circuits logiques programmables de deux modules de gestion de baie ou de châssis, identifiés par les références générales n et n+1 sur cette figure.

Selon le mode de réalisation illustré sur la figure 3, dans le sens d'une transmission d'une trame de données du circuit n vers le circuit n+1, le circuit n fournit, en sortie d'une bascule 52, une trame de données FDATIN au segment de transmission 50. Cette trame de données FDATIN est reçue par une première ligne à retard LR1 du segment de transmission 50, conçue sous la forme d'une boucle à verrouillage de retard, dite DLL (de l'anglais « Delay Locked Loop »), asservie par une valeur de retard ajustable DLY. Elle est ensuite transmise dans une portion de câble « aller » 54 du segment de transmission 50 pour la fourniture d'une trame FRXD au circuit n. Deux amplificateurs de ligne 56A et 56B, dits respectivement buffer différentiel d'émission et buffer différentiel de réception, sont disposés respectivement en entrée et en sortie de la portion de câble 54 dans le sens de transmission du circuit n vers le circuit n+1.

Dans le sens inverse de transmission de la trame de données FDATIN, un écho est engendré lors de la réception de la trame FRXD par le circuit n. Cet écho est reçu par une seconde ligne à retard LR2 du segment de transmission 50, conçue également sous la forme d'une DLL (de l'anglais « Delay Locked Loop »), asservie par la même valeur de retard ajustable DLY. Il est ensuite transmis dans une portion de câble « retour » 58 du segment de transmission 50 pour la fourniture d'une trame BRXD au circuit n. Deux amplificateurs de ligne 60A et 60B, dits respectivement buffer différentiel d'émission et buffer différentiel de réception, sont disposés respectivement en entrée et en sortie de la portion de câble 58 dans le sens de transmission du circuit n+1 vers le circuit n.

Le circuit n comporte en outre un comparateur de phases 62 qui compare les débuts de trames FDATIN et BRXD pour fournir un signal de déphasage PHERR. En fonction de la valeur de ce signal PHERR, il ajuste la valeur de retard DLY pour tendre vers une valeur de déphasage égale à une période d'horloge, soit 1µs. De la sorte, le temps de transmission de la trame de données dans le segment de transmission converge vers 500 ns. En pratique, la valeur est de 500 ns +/- 0,5 ns. En ajoutant un temps de traitement de 500 ns +/- 0,5 ns également dans le circuit d'émission n, on obtient un temps global de transmission constant, via le segment de transmission 50, de 1µs +/- 1 ns.

Selon un autre mode de réalisation illustré sur la figure 4, une amélioration peut être apportée de façon optionnelle dans la conception du segment de transmission 50 pour tenir compte de dispersions dans les portions de câbles 54, 58 et dans les circuits n, n+1. Conformément à cet autre mode de réalisation, les portions de câbles peuvent transmettre sélectivement dans les deux sens en fonction d'une valeur de consigne binaire DIR commandée par le circuit n.

En plus des éléments déjà décrits en référence à la figure 3, deux amplificateurs de ligne 57A et 57B, dits respectivement buffer différentiel d'émission et buffer différentiel de réception, sont disposés respectivement de part et d'autre de la portion de câble 54 dans le sens de transmission du circuit n+1 vers le circuit n. Deux autres amplificateurs de ligne 61A et 61B, dits respectivement buffer différentiel d'émission et buffer différentiel de réception, sont disposés respectivement de part et d'autre de la portion de câble 58 dans le sens de transmission du circuit n vers le circuit n+1.

La sortie de la première ligne à retard LR1 est connectée aux entrées des amplificateurs de ligne 56A et 61A. La sortie de la seconde ligne à retard LR2 est connectée aux entrées des amplificateurs de ligne 60A et 57A. Les sorties des amplificateurs de ligne 56B et 61B sont connectées aux entrées d'un multiplexeur 64 fournissant en sortie la trame de données FRXD. Enfin, les sorties des amplificateurs de ligne 60B et 57B sont connectées aux entrées d'un multiplexeur 66 fournissant en sortie la trame de données BRXD. Le multiplexeur 64 est commandé par la consigne DIR de manière à transmettre la sortie de l'amplificateur de ligne 56B lorsque DIR = 1 et la sortie de l'amplificateur de ligne 61B lorsque DIR = 0. De même, le multiplexeur 66 est commandé par la consigne DIR de manière à transmettre la sortie de l'amplificateur de ligne 60B lorsque DIR = 1 et la sortie de l'amplificateur de ligne 57B lorsque DIR = 0.

Enfin, dans le circuit n+1 un comparateur de phase 68 reçoit la trame de données FRXD et la compare à une référence de phase locale PHREF quelconque pour fournir une information de déphasage DIFF-PHERR en plus de PHERR. En alternant dynamiquement les valeurs de DIR, on obtient ainsi deux mesures différentes qui traduisent l'asymétrie entre les deux sens possibles de transmission. Cette information est retransmise du circuit n+1 au circuit n qui ajuste indépendamment deux valeurs d'asservissement différentes : la valeur FWDDLY pour la première ligne à retard LR1 et la valeur BKWDLY pour la seconde ligne à retard LR2.

De la sorte, le temps de transmission de la trame de données dans le segment de transmission converge vers 500 ns +/- 0,5 ns même en cas d'asymétrie selon le sens de transmission. En ajoutant le temps de traitement de 500 ns +/- 0,5 ns également dans le circuit d'émission n, on obtient là encore un temps global de transmission constant, via le segment de transmission 50, de 1µs +/- 1 ns.

On note que, conformément à la structure proposée en référence aux figures 1 et 2, chaque nœud N_{i,j,k,l} de la grappe de serveurs 12 est aisément spatialement localisable par un système de coordonnées (i, j, k, l) directement lié à l'organisation des segments de transmission, i, j et k indiquant le nombre de segments de premier, deuxième et troisième niveaux séparant ce nœud d'une source choisie comme étant par exemple le nœud N_{1,1,1,1} de la baie B_{1,1}. Ainsi, en réglant le temps de transmission d'une information d'horodatage par chaque segment de transmission à une valeur constante établie pour chaque segment de transmission, il devient aisé de synchroniser précisément tous les nœuds à partir de la source choisie en tenant compte des segments de transmission traversés entre la source et ce nœud par l'information d'horodatage, ces segments effectivement traversés dépendant directement ou indirectement de la localisation (i, j, k, l) de chaque nœud.

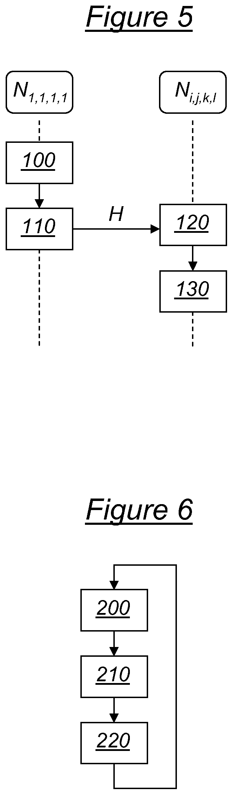

Un procédé de synchronisation de la grappe de serveurs 12 va donc maintenant être détaillé en référence à la figure 5.

Conformément à une première étape 100 de ce procédé, le nœud N_{1,1,1,1} de la baie B_{1,1} génère une information d'horodatage à partir de son horloge interne. Cette information d'horodatage comporte l'heure courante fournie par l'horloge interne avec une précision qui peut être de l'ordre d'une centaine de nanosecondes ou même en deçà.

Ensuite, au cours d'une étape de transmission 110, cette information d'horodatage est diffusée à l'ensemble des autres nœuds de la grappe de serveurs 12. Pour parvenir à l'un quelconque des nœuds N_{i,j,k,l}, elle traverse un certain nombre de segments de transmission depuis la source jusqu'au châssis dans lequel se trouve ce nœud. Si l'on néglige le temps de quelques nanosecondes mis par l'information d'horodatage pour parvenir au nœud N_{i,j,k,l} depuis le module de gestion de son châssis CMM_{i,j,k}, le temps qu'elle met entre la source et le nœud est la somme des temps mis pour traverser chacun des segments de transmission de premier, deuxième et troisième niveaux concernés. Etant donné que le temps de traversée de chaque segment de transmission est réglé de façon prédéterminée et précise à l'aide des lignes à retard LR, il suffit de connaître le trajet réellement suivi par l'information d'horodatage pour déterminer son temps de transmission.

Deux cas de figure sont alors possibles.

Si la configuration du réseau d'interconnexion d'horloges est telle qu'il n'est pas possible a priori de savoir quel trajet sera suivi par l'information d'horodatage entre la source et chaque nœud destinataire, alors une information relative aux segments de transmission effectivement traversés entre la source et ce nœud doit être fournie avec l'information d'horodatage. Elle peut l'être sous la forme de champs d'indication des segments traversés, ces champs pouvant être renseignés progressivement lors de la transmission. Dans l'exemple du réseau d'interconnexion d'horloges considéré, à trois niveaux de segments de transmission, l'information relative aux segments de transmission effectivement traversés comporte un champ d'indication du nombre de segments d'interconnexion de rangées (i.e. de premier niveau) traversés entre la source et ce nœud, un champ d'indication du nombre de segments d'interconnexion de baies informatiques d'une même rangée (i.e. de deuxième niveau) traversés entre la source et ce nœud et un champ d'indication du nombre de segments d'interconnexion de châssis (i.e. de troisième niveau) traversés entre la source et ce nœud. Des moyens d'incrémentation par matériel associés à chaque segment sont alors prévus pour l'incrémentation de chacun de ces champs associés à une information d'horodatage dès qu'un segment correspondant est traversé par un message incluant cette information d'horodatage. A l'arrivée, il suffit de retrouver le nombre de segments de premier, deuxième et troisième niveaux enregistrés dans les champs précités pour en déduire le temps de transmission correspondant. Plus précisément, si conformément à l'exemple précité, tous les segments de transmission de premier, deuxième et troisième niveaux sont réglés sur une même valeur de temps de transmission, telle que 1 µs, alors il suffit même de connaître le nombre global de segments effectivement traversés. Cette approche, liée à la configuration géographique du réseau d'interconnexion d'horloges, est bien sûr à distinguer d'une approche d'identification logique du trajet suivi par l'information d'horodatage. Des commandes connues de type « Traceroute » sous Unix ou Linux permettent de connaître un trajet logique suivi par des données en identifiant les nœuds traversés par leurs adresses IP, mais ne permettent pas de fournir des informations relatives aux segments concrètement traversés pour en déduire précisément le temps de transmission correspondant.

Si la configuration du réseau d'interconnexion d'horloges est telle qu'il est possible a priori de savoir quel trajet sera suivi par l'information d'horodatage entre la source et chaque nœud destinataire, alors l'information relative aux segments de transmission traversés entre la source et ce nœud peut être simplement déduite de la position de ce dernier. Plus précisément, dans l'exemple illustré sur les figures 1 et 2, cette information peut être déduite des indices i, j et k : entre la source N_{1,1,1,1} et le nœud N_{i,j,k,l}, (i-1) segments de premier niveau, (j-1) segments de deuxième niveau et k segments de troisième niveau sont traversés. Si en outre, conformément à l'exemple précité, tous les segments de transmission de premier, deuxième et troisième niveaux sont réglés sur une même valeur de temps de transmission, telle que 1 µs, alors le temps de transmission total entre la source N_{1,1,1,1} et le nœud N_{i,j,k,l} peut être estimé précisément à (i+j+k-2) x 1 µs. Si la position de chaque nœud n'est pas connue des nœuds eux-mêmes, alors il devient nécessaire de se ramener au cas de figure précédent dans lequel des champs prévus à cet effet sont renseignés en cours de transmission, pour retrouver les valeurs de i, j et k.

Au cours d'une étape 120, l'un quelconque des nœuds destinataires N_{i,j,k,l} reçoit l'information d'horodatage. Cette réception déclenche une étape 130 de réglage de son horloge interne à partir de cette information d'horodatage et de l'information précitée relative aux segments de transmission traversés entre la source et ce nœud. Pour reprendre les notations du paragraphe précédent, si H est la valeur de l'information d'horodatage fournie par la source, alors l'horloge interne du nœud N_{i,j,k,l} est réglée à la valeur H + (i+j+k-2) x 1 µs.

Les étapes précédemment décrites 100, 110, 120 et 130 sont par exemple régulièrement répétées pour maintenir une bonne synchronisation des horloges internes des nœuds de la grappe de serveurs 12 avec une précision acceptable pour obtenir un ordonnancement correct dans les traces d'événements. Compte tenu des éléments donnés en exemple, la précision de synchronisation peut atteindre quelques nanosecondes, ou au pire quelques dizaines de nanosecondes. Elle peut en tout cas être bien inférieure à la microseconde voire à la centaine de nanosecondes, ce qui est suffisant dans un grand nombre de cas et largement inférieur à ce qui pourrait être obtenu avec une synchronisation par réseau Ethernet.

Une fois qu'une bonne synchronisation des horloges internes est assurée à l'aide du procédé précité ou de tout autre procédé de synchronisation équivalent, un autre problème connu des grappes de serveurs peut être résolu. Il s'agit du problème du « bruit du système d'exploitation » qui se traduit par une chute des performances des grappes de serveurs de tailles importantes.

Les nœuds de calcul d'une grappe de serveurs sont amenés à exécuter deux types de processus : les processus de calcul qui sont directement liés aux instructions de calcul exécutées par la grappe de serveurs, pour le compte des utilisateurs ; les processus de système d'exploitation qui sont eux directement liés aux systèmes d'exploitation des nœuds de calcul et indépendants des instructions de calculs. Par défaut, les processus de système d'exploitation sont amenés à interrompre les processus de calcul de façon plus ou moins aléatoire. Or les nœuds de calcul d'une grappe de serveur fonctionnent généralement selon un mode dit de « bulk synchronization » selon lequel des phases de calculs indépendants exécutés par chaque nœud de calcul sont suivies de phases d'échanges de données entre nœuds de calcul lors desquelles chaque nœud de calcul va lui-même chercher les données dont il a besoin dans les mémoires des autres indépendamment de leur système d'exploitation. Les phases d'échanges de données sont exécutées selon un protocole d'échange de données entre les nœuds de type RDMA (de l'Anglais « Remote Direct Memory Access ») et sous condition de passage d'une barrière de synchronisation qui assure que les phases de calculs fournissant les données nécessaires sont toutes terminées. Ainsi, lorsque le nombre de nœuds de calcul augmente et que les calculs sont amenés à être interrompus inopportunément par des processus de système d'exploitation dans chaque nœud, les temps de traitements augmentent et les performances chutent. En effet, l'interruption éventuelle d'un nœud quelconque se produit indépendamment des interruptions éventuelles des autres nœuds, de sorte que statistiquement le franchissement des barrières de synchronisation successives est globalement retardé.

Une première solution pour résoudre ce problème de bruit du système d'exploitation est de déprogrammer le plus grand nombre de processus de système d'exploitation, notamment ceux qui en pratique ne semblent pas *a priori* très utiles. Mais cette solution est dangereuse parce qu'elle fragilise le fonctionnement de la grappe de serveurs dans son ensemble.

Une autre solution consiste à tirer profit d'une bonne synchronisation des horloges internes des nœuds de calcul pour imposer toute exécution des processus de système d'exploitation dans des fenêtres temporelles définies à l'avance. Le déclenchement de ces exécutions dans ces fenêtres temporelles prédéterminées étant réalisé par l'horloge interne de chaque nœud de calcul, il devient aisé d'optimiser la bonne exécution des instructions liées aux systèmes d'exploitation lorsque les nœuds sont correctement synchronisés. En particulier, ces fenêtres temporelles prédéterminées peuvent être les mêmes pour tous les nœuds de calcul.

Ainsi, le principe de fonctionnement général de la grappe de serveurs 12 peut suivre la succession d'étapes illustrée sur la figure 6. Au cours d'une étape principale de calcul 200, les nœuds de calcul exécutent leurs processus de calculs selon différentes phases successives interrompues par des phases d'échanges de données. A un instant prédéterminé pour l'ensemble des nœuds de calcul, l'étape principale de calcul est interrompue (210) et des processus de système d'exploitation éventuellement mis en attente pendant l'étape principale de calcul dans chaque nœud sont exécutés. A un autre instant prédéterminé pour l'ensemble des nœuds de calcul et ultérieur au précédent, l'étape principale de calcul 200 reprend (220) interrompant l'exécution des processus de système d'exploitation. On assure ainsi un taux d'occupation optimal des nœuds de calcul, mais cela suppose bien entendu une bonne synchronisation préalable des horloges internes. C'est pour cette raison qu'une telle gestion des instructions de système d'exploitation tire avantageusement profit du procédé de synchronisation décrit précédemment. Mais il convient de noter que la résolution du problème de bruit du système d'exploitation par cette méthode est indépendante du procédé de synchronisation selon l'invention.

Il apparaît clairement qu'un procédé de synchronisation tel que celui décrit en référence à la figure 5 est à la fois simple et performant. En imposant un temps prédéterminé de transmission de l'information d'horodatage dans chaque segment du réseau d'interconnexion d'horloges, par exemple à une valeur maximale commune pour tous les segments, on ralentit cette transmission mais on maîtrise alors de façon déterministe le temps de transmission pour chaque nœud de la grappe de serveurs ce qui permet d'assurer une synchronisation très précise.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

Notamment, dans l'exemple décrit précédemment, les temps de transmission de l'information d'horodatage à l'intérieur de chaque châssis ont été négligés mais pourraient être pris en compte de la même façon que les segments de transmission entre rangées, baies et châssis.

Par ailleurs, le réglage du temps de transmission de l'information d'horodatage n'est pas nécessairement le même pour tous les segments de transmission : une différence pourrait être faite entre les segments de transmission entre rangées, baies et châssis puisqu'ils ne sont a priori pas de mêmes longueurs : de l'ordre de 10 m pour les segments entre rangées, de 1 m pour les segments entre baies et de 50 cm pour les segments entre châssis. Cela permettrait d'affiner le réglage et d'accélérer ainsi la transmission de l'information d'horodatage.

Plus généralement, dans les revendications qui suivent, les termes utilisés ne doivent pas être interprétés comme limitant les revendications au mode de réalisation exposé dans la présente description.

## Revendications

1. Procédé de synchronisation d'une grappe de serveurs (12) comportant une pluralité de nœuds (N_{i,j,k,l}) munis chacun d'une horloge interne et interconnectés entre eux par un réseau d'interconnexion d'horloges, ce réseau d'interconnexion d'horloges comportant une pluralité de segments de transmission (10_{i-1/i}, 20_{i,j-1/j}, 30_{k-1/k}, 40ₖ) reliant les nœuds entre eux, le procédé comportant les étapes suivantes :
- génération (100) d'une information d'horodatage (H) par l'horloge interne d'une source (N_{1,1,1,1}) choisie parmi les nœuds (N_{i,j,k,l}) de la grappe de serveurs (12),
- transmission (110), par les segments de transmission (10_{i-1/i}, 20_{i,j-1/j}, 30_{k-1/k}, 40ₖ) du réseau d'interconnexion d'horloges, de cette information d'horodatage (H) à l'ensemble des nœuds (N_{i,j,k,l}) de la grappe de serveurs (12) à partir de la source (N_{1,1,1,1}),
- réglage (130) de l'horloge interne de chaque nœud (N_{i,j,k,l}) de la grappe de serveurs (12) à partir de cette information d'horodatage (H),
**caractérisé en ce qu'**il comporte en outre les étapes suivantes :
- réglage (110) du temps de transmission de l'information d'horodatage (H) par chaque segment de transmission (10_{i-1/i}, 20_{i,j-1/j}, 30_{k-1/k}, 40ₖ) à une valeur constante établie pour chaque segment de transmission,
- à réception (120) de l'information d'horodatage (H) par l'un quelconque des nœuds (N_{i,j,k,l}) de la grappe de serveurs (12), réglage (130) de son horloge interne à partir de l'information d'horodatage (H) et d'une information relative aux segments de transmission traversés entre la source (N_{1,1,1,1}) et ce nœud (N_{i,j,k,l}).

2. Procédé de synchronisation d'une grappe de serveurs (12) selon la revendication 1, dans lequel le réglage (110) du temps de transmission de l'un quelconque des segments de transmission (10_{i-1/i}, 20_{i,j-1/j}, 30_{k-1/k}, 40ₖ) est réalisé à l'aide d'au moins une ligne à retard (LR1, LR2) réglée pour aligner la phase d'un signal porteur de l'information d'horodatage sur la phase d'un signal de référence interne aux nœuds oscillant à une fréquence correspondant à une fréquence d'oscillation commune de toutes les horloges internes des nœuds (N_{i,j,k,l}) de la grappe de serveurs (12).

3. Procédé de synchronisation d'une grappe de serveurs (12) selon la revendication 2, dans lequel le réglage (110) du temps de transmission de l'un quelconque des segments de transmission (10_{i-1/i}, 20_{i,j-1/j}, 30_{k-1/k}, 40ₖ) est réalisé à l'aide de deux lignes à retard (LR1, LR2) asservies en fonction d'un déphasage (PHERR) mesuré entre une trame de données (FDATIN), destinée à être fournie en entrée de l'une (LR1) des deux lignes à retard dans le sens de transmission de l'information d'horodatage, et un écho (BRDX) de cette trame de données, fourni en sortie de l'autre (LR2) des deux lignes à retard dans le sens inverse de transmission de l'information d'horodatage.

4. Procédé de synchronisation d'une grappe de serveurs (12) selon la revendication 3, dans lequel les valeurs d'asservissement (FWDDLY, BKWDLY) des deux lignes à retard (LR1, LR2) de l'un quelconque des segments de transmission (10_{i-1/i}, 20_{i,j-1/j}, 30_{k-1/k}, 40ₖ) sont déterminées différemment l'une de l'autre en fonction, en outre, d'un déphasage (DIFF-PHERR) mesuré en sortie de ce segment de transmission dans le sens de transmission de l'information d'horodatage entre la trame de données (FRXD) fournie en sortie de l'une (LR1) des deux lignes à retard et une référence locale de phase prédéterminée (PHREF).

5. Procédé de synchronisation d'une grappe de serveurs (12) selon l'une quelconque des revendications 1 à 4, dans lequel la valeur du temps de transmission établie pour chaque segment de transmission (10_{i-1/i}, 20_{i,j-1/j}, 30_{k-1/k}, 40ₖ) est une même valeur maximale commune établie pour tous les segments de transmission.

6. Procédé de synchronisation d'une grappe de serveurs (12) selon la revendication 5, dans lequel ladite même valeur maximale commune établie pour tous les segments de transmission (10_{i-1/i}, 20_{i,j-1/j}, 30_{k-1/k}, 40ₖ) est obtenue par un réglage des lignes à retard (LR) tel que la phase d'un signal porteur de l'information d'horodatage est alignée sur les fronts montants ou descendants du signal de référence, ce dernier oscillant autour d'une fréquence intermédiaire, par exemple 1 MHz.

7. Procédé de synchronisation d'une grappe de serveurs (12) selon la revendication 5 ou 6, dans lequel l'information relative aux segments de transmission (10_{i-1/i}, 20_{i,j-1/j}, 30_{k-1/k}, 40ₖ) traversés entre la source (N_{1,1,1,1}) et l'un quelconque des nœuds (N_{i,j,k,l}) de la grappe de serveurs (12) pour la transmission de l'information d'horodatage comporte le nombre de segments de transmission traversés entre la source et ce nœud.

8. Procédé de synchronisation d'une grappe de serveurs (12) selon l'une quelconque des revendications 1 à 7, dans lequel une pluralité de nœuds (N_{i,j,k,l}), dits nœuds de calcul, est apte à exécuter des instructions de programmes d'application et des instructions de système d'exploitation, chacun de ces nœuds de calcul étant programmé pour exécuter les instructions de système d'exploitation dans des fenêtres temporelles prédéterminées, le déclenchement de ces exécutions dans ces fenêtres temporelles prédéterminées étant réalisé par l'horloge interne de chaque nœud de calcul (N_{i,j,k,l}).

9. Procédé de synchronisation d'une grappe de serveurs (12) selon la revendication 8, dans lequel les fenêtres temporelles prédéterminées sont les mêmes pour tous les nœuds de calcul (N_{i,j,k,l}).

10. Grappe de serveurs (12) comportant une pluralité de nœuds (N_{i,j,k,l}) munis chacun d'une horloge interne et interconnectés entre eux par un réseau d'interconnexion d'horloges, ce réseau d'interconnexion d'horloges comportant une pluralité de segments de transmission (10_{i-1/i}, 20_{i,j-1/j}, 30_{k-1/k}, 40ₖ) reliant les nœuds entre eux, la grappe de serveurs comportant :
- une source (N_{1,1,1,1}), choisie parmi les nœuds (N_{i,j,k,l}) de la grappe de serveurs (12), comportant des moyens de génération d'une information d'horodatage (H) à l'aide de son horloge interne,
- des moyens de transmission, par les segments de transmission (10_{i-1/i}, 20_{i,j-1/j}, 30_{k-1/k}, 40ₖ) du réseau d'interconnexion d'horloges, de cette information d'horodatage (H) à l'ensemble des nœuds (N_{i,j,k,l}) de la grappe de serveurs (12) à partir de la source (N_{1,1,1,1}),
- des moyens de réglage de l'horloge interne de chaque nœud (N_{i,j,k,l}) de la grappe de serveurs (12) à partir de cette information d'horodatage (H),
**caractérisée en ce qu'**elle comporte en outre des moyens (LR) de réglage du temps de transmission de l'information d'horodatage (H) par chaque segment de transmission (10_{i-1/i}, 20_{i,j-1/j}, 30_{k-1/k}, 40ₖ) à une valeur constante établie pour chaque segment de transmission, et **en ce que** les moyens de réglage d'horloge interne sont conçus pour régler l'horloge interne de chaque nœud (N_{i,j,k,l}) de la grappe de serveurs (12) à partir en outre d'une information relative aux segments de transmission traversés entre la source et ce nœud.

11. Grappe de serveurs (12) selon la revendication 10, dans laquelle :
- chaque nœud (N_{i,j,k,l}) est inclus dans un châssis (C_{i,j,k}), lui-même inclus dans une baie informatique (B_{i,j}), elle-même incluse dans une rangée (Ri) de baies informatiques, la grappe de serveur (12) comportant une pluralité de rangées (R1, ... Ri, ... RI) de baies informatiques,
- le réseau d'interconnexion d'horloges comporte une pluralité de segments d'interconnexion des rangées entre elles (10_{i-1/i}), de segments d'interconnexion de baies informatiques d'une même rangée entre elles (20_{i,j-1/j}), de segments d'interconnexion de châssis d'une même baie informatique entre eux (30_{k-1/k}) et de segments d'interconnexion de nœuds d'un même châssis entre eux (40ₖ), et
- les moyens de transmission de l'information d'horodatage (H) sont aptes à transmettre à chaque nœud (N_{i,j,k,l}) de la grappe de serveurs (12), avec cette information d'horodatage, au moins une information relative au nombre de segments d'interconnexion de rangées (10_{i-1/i}) traversés entre la source et ce nœud, au nombre de segments d'interconnexion de baies informatiques (20_{i-1/i}) traversés entre la source et ce nœud et au nombre de segments d'interconnexion de châssis (30_{i-1/i}) traversés entre la source et ce nœud.

12. Grappe de serveurs (12) selon la revendication 11, dans laquelle, l'information relative aux segments de transmission (10_{i-1/i}, 20_{i,j-1/j}, 30_{k-1/k}, 40ₖ) traversés entre la source (N_{1,1,1,1}) et l'un quelconque des nœuds (N_{i,j,k,l}) de la grappe de serveurs (12) comportant au moins un champ d'indication du nombre de segments d'interconnexion de rangées (10_{i-1/i}) traversés entre la source et ce nœud, un champ d'indication du nombre de segments d'interconnexion de baies informatiques (20_{i-1/i}) traversés entre la source et ce nœud et un champ d'indication du nombre de segments d'interconnexion de châssis (30_{i-1/i}) traversés entre la source et ce nœud, des moyens d'incrémentation sont prévus pour l'incrémentation de chacun de ces champs dès qu'un segment correspondant est traversé par un message incluant l'information d'horodatage (H) destinée à ce nœud (N_{i,j,k,l}).

13. Grappe de serveurs (12) selon l'une quelconque des revendications 10 à 12, comportant :
- un premier réseau d'administration générale interconnectant tous les nœuds entre eux, et
- au moins un second réseau de gestion de données de calcul destinées à être échangées entre les nœuds, interconnectant au moins une partie des nœuds entre eux,
dans laquelle ledit réseau d'interconnexion d'horloges est un réseau supplémentaire, distinct du réseau d'administration générale et du réseau de gestion de données de calcul, notamment un réseau mettant en oeuvre le protocole HDLC.

## Patentansprüche

1. Verfahren zur Synchronisation eines Serverclusters (12), eine Vielzahl von Knoten (N_{i,j,k,l}) beinhaltend, die jeweils mit einer inneren Uhr versehen und durch ein Uhrenverknüpfungsnetzwerk miteinander verknüpft sind, wobei dieses Uhrenverknüpfungsnetzwerk eine Vielzahl von Übertragungssegmenten (10_{i-1/i}, 20_{i,j-1/j}, 30_{k-1/k}, 40ₖ) beinhaltet, die die Knoten miteinander verbinden, wobei das Verfahren die folgenden Schritte beinhaltet:
- Generieren (100) einer Zeitstempelinformation (H) durch die innere Uhr einer Quelle (N_{1,1,1,1}) , die aus den Knoten (N_{i,j,k,l}) des Serverclusters (12) ausgewählt wird,
- Übertragen (110) durch die Übertragungssegmente (10_{i-1/i}, 20_{i,j-1/j}, 30_{k-1/k}, 40ₖ) des Uhrenverknüpfungsnetzwerks dieser Zeitstempelinformation (H) an die Gesamtheit der Knoten (N_{i,j,k,l}) des Serverclusters (12) aus der Quelle (N_{1,1,1,1}),
- Einstellen (130) der inneren Uhr jedes Knotens (N_{i,j,k,l}) des Serverclusters (12) ausgehend von dieser Zeitstempelinformation (H),
**dadurch gekennzeichnet, dass** es weiter die folgenden Schritte beinhaltet:
- Einstellen (110) der Übertragungszeit der Zeitstempelinformation (H) durch jedes Übertragungssegment (10_{i-1/i}, 20_{i,j-1/j}, 30_{k-1/k}, 40ₖ) auf einen konstanten Wert, der für jedes Übertragungssegment festgelegt wird,
- bei Empfang (120) der Zeitstempelinformation (H) durch einen der Knoten (N_{i,j,k,l}) des Serverclusters (12), Einstellen (130) seiner inneren Uhr ausgehend von der Zeitstempelinformation (H) und einer Information in Bezug auf die zwischen der Quelle (N_{1,1,1,1}) und diesem Knoten (N_{i,j,k,l}) durchquerten Übertragungssegmente.

2. Verfahren zur Synchronisation eines Serverclusters (12) nach Anspruch 1, wobei das Einstellen (110) der Übertragungszeit irgendeines der Übertragungssegmente (10_{i-1/i}, 20_{i,j-1/j}, 30_{k-1/k}, 40ₖ) mithilfe mindestens einer Verzögerungsleitung (LR1, LR2) durchgeführt wird, die eingestellt ist, um die Phase eines Trägersignals der Zeitstempelinformation nach der Phase eines Referenzsignals innerhalb der Knoten auszurichten, das auf einer Frequenz oszilliert, die einer gemeinsamen Oszillationsfrequenz aller innerer Uhren der Knoten (N_{i,j,k,l}) des Serverclusters (12) entspricht.

3. Verfahren zur Synchronisation eines Serverclusters (12) nach Anspruch 2, wobei das Einstellen (110) der Übertragungszeit irgendeines der Übertragungssegmente (10_{i-1/i}, 20_{i,j-1/j}, 30_{k-1/k}, 40ₖ) mithilfe von zwei Verzögerungsleitungen (LR1, LR2) durchgeführt wird, die in Abhängigkeit von einer Phasenverschiebung (PHERR) angesteuert werden, die zwischen einem Datenraster (FDATIN), der dazu bestimmt ist, als Eingang der einen (LR1) der beiden Verzögerungsleitungen in der Übertragungsrichtung der Zeitstempelinformation und einem Echo (BRDX) dieses Datenrasters gemessen wird, das am Ausgang der anderen (LR2) der beiden Verzögerungsleitungen in umgekehrter Übertragungsrichtung der Zeitstempelinformation bereitgestellt wird.

4. Verfahren zur Synchronisation eines Serverclusters (12) nach Anspruch 3, wobei die Ansteuerungswerte (FWDDLY, BKWDLY) der beiden Verzögerungsleitungen (LR1, LR2) des irgendeinen der Übertragungssegmente (10_{i-1/i}, 20_{i,j-1/j}, 30_{k-1/k}, 40ₖ) unterschiedlich voneinander, weiter in Abhängigkeit von einer Phasenverschiebung (DIFF-PHERR) bestimmt werden, die am Ausgang dieses Übertragungssegments in der Übertragungsrichtung der Zeitstempelinformation zwischen dem Datenraster (FRXD), der am Ausgang der einen (LR1) der beiden Verzögerungsleitungen und einer vorbestimmten lokalen Phasenreferenz (PHREF) bereitgestellt wird.

5. Verfahren zur Synchronisation eines Serverclusters (12) nach einem der Ansprüche 1 bis 4, wobei der Wert der Übertragungszeit, der für jedes Übertragungssegment (10_{i-1/i}, 20_{i,j-1/j}, 30_{k-1/k}, 40ₖ) festgelegt wird, ein gleicher gemeinsamer maximaler Wert ist, der für alle Übertragungssegmente festgelegt wird.

6. Verfahren zur Synchronisation eines Serverclusters (12) nach Anspruch 5, wobei der gleiche gemeinsame maximale Wert, der für alle Übertragungssegmente (10_{i-1/i}, 20_{i,j-1/j}, 30_{k-1/k}, 40ₖ) festgelegt wird, durch ein Einstellen der Verzögerungsleitungen (LR) erhalten wird, sodass die Phase eines Trägersignals der Zeitstempelinformation nach den ansteigenden oder abfallenden Flanken des Referenzsignals ausgerichtet wird, wobei diese letztere um eine Zwischenfrequenz, beispielweise 1 MHz, herum oszilliert.

7. Verfahren zur Synchronisation eines Serverclusters (12) nach Anspruch 5 oder 6, wobei die Information in Bezug auf die zwischen der Quelle (N_{1,1,1,1}) und irgendeinem Knoten (N_{i,j,k,l}) des Serverclusters (12) durchquerten Übertragungssegmente (10_{i-1/i}, 20_{i,j-1/j}, 30_{k-1/k}, 40ₖ) zur Übertragung der Zeitstempelinformation die Anzahl an zwischen der Quelle und diesem Konten durchquerten Übertragungssegmenten beinhaltet.

8. Verfahren zur Synchronisation eines Serverclusters (12) nach einem der Ansprüche 1 bis 7, wobei eine Vielzahl von Knoten (N_{i,j,k,l}), Berechnungsknoten genannt, imstande ist, Anweisungen von Anwendungsprogrammen und Betriebssystemanweisungen auszuführen, wobei jeder dieser Berechnungsknoten programmiert ist, um die Betriebssystemanweisungen in vorbestimmten Zeitfenstern auszuführen, wobei das Auslösen dieser Ausführungen in diesen vorbestimmten Zeitfenstern durch die innere Uhr eines jeden Berechnungsknotens (N_{i,j,k,l}) realisiert wird.

9. Verfahren zur Synchronisation eines Serverclusters (12) nach Anspruch 8, wobei die vorbestimmten Zeitfenster für alle Berechnungsknoten (N_{i,j,k,l}) dieselben sind.

10. Servercluster (12), eine Vielzahl von Knoten (N_{i,j,k,l}) beinhaltend, die jeweils mit einer inneren Uhr versehen und durch ein Uhrenverknüpfungsnetzwerk miteinander verknüpft sind, wobei dieses Uhrenverknüpfungsnetzwerk eine Vielzahl von Übertragungssegmenten (10_{i-1/i}, 20_{i,j-1/j}, 30_{k-1/k}, 40ₖ) beinhaltet, die die Knoten miteinander verbinden, wobei der Servercluster Folgendes beinhaltet:
- eine Quelle (N_{1,1,1,1}), die aus den Knoten (N_{i,j,k,l}) des Serverclusters (12) ausgewählt wird, Mittel zum Generieren einer Zeitstempelinformation (H) mithilfe seiner inneren Uhr beinhaltend,
- Mittel zum Übertragen durch die Übertragungssegmente (10_{i-1/i}, 20_{i,j-1/j}, 30_{k-1/k}, 40ₖ) des Uhrenverknüpfungsnetzwerks dieser Zeitstempelinformation (H) an die Gesamtheit der Knoten (N_{i,j,k,l}) des Serverclusters (12) ausgehend von der Quelle (N_{1,1,1,1}),
- Mittel zum Einstellen der inneren Uhr jedes Knotens (N_{i,j,k,l}) des Serverclusters (12) ausgehend von dieser Zeitstempelinformation (H),
**dadurch gekennzeichnet, dass** er weiter Mittel (LR) zum Einstellen der Übertragungszeit der Zeitstempelinformation (H) durch jedes Übertragungssegment (10_{i-1/i}, 20_{i,j-1/j}, 30_{k-1/k}, 40ₖ) auf einen konstanten Wert beinhaltet, der für jedes Übertragungssegment festgelegt wird, dadurch, dass die Mittel zum Einstellen der inneren Uhr gestaltet sind, um die innere Uhr jedes Knotens (N_{i,j,k,l}) des Serverclusters (12) weiter ausgehend von einer Information in Bezug auf die zwischen der Quelle und diesem Knoten durchquerten Übertragungssegmente einzustellen.

11. Servercluster (12) nach Anspruch 10, in dem:
- jeder Knoten (N_{i,j,k,l}) in einem Grundrahmen (C_{i,j,k}) beinhaltet ist, der selbst in einem Computergestell (B_{i,j}) beinhaltet ist, das selbst in einer Reihe (Ri) von Computergestellen beinhaltet ist, wobei der Servercluster (12) eine Vielzahl von Reihen (R1, ... Ri, ... RI) von Computergestellen beinhaltet,
- das Uhrenverknüpfungsnetzwerk eine Vielzahl von Verknüpfungssegmenten der Reihen miteinander (10_{i-1/i}), von Verknüpfungssegmenten der Computergestelle einer gleichen Reihe miteinander (20_{i,j-1/j}), von Verknüpfungssegmenten von Grundrahmen eines gleichen Computergestells miteinander (30_{k-1/k}) und Verknüpfungssegmente von Knoten eines gleichen Grundrahmens miteinander (40ₖ) beinhaltet, und
- die Übertragungsmittel der Zeitstempelinformation (H) imstande sind, jedem Knoten (N_{i,j,k,l}) des Serverclusters (12) mit dieser Zeitstempelinformation mindestens eine Information in Bezug auf die Anzahl an zwischen der Quelle und diesem Knoten durchquerten Reihenverknüpfungssegmenten (10_{i-1/i}), die Anzahl an zwischen der Quelle und diesem Knoten durchquerten Grundrahmenverknüpfungssegmenten (20_{i-1/i}), und die Anzahl an zwischen der Quelle und diesem Knoten durchquerten Grundrahmenverknüpfungssegmenten(30_{i-1/i}) zu übertragen.

12. Servercluster (12) nach Anspruch 11, in dem die Information in Bezug auf die zwischen der Quelle (N_{1,1,1,1}) und irgendeinem Knoten (N_{i,j,k,l}) durchquerten Übertragungssegmente (10_{i-1/i}, 20_{i,j-1/j}, 30_{k-1/k}, 40ₖ) des Serverclusters (12) mindestens ein Hinweisfeld auf die Anzahl an zwischen der Quelle und diesem Knoten durchquerten Reihenverknüpfungssegmenten (10_{i-1/i}), ein Hinweisfeld auf die Anzahl an zwischen der Quelle und diesem Knoten durchquerten Computergestell-Verknüpfungssegmenten (20_{i-1/i}) und ein Hinweisfeld auf die Anzahl an zwischen der Quelle und diesem Knoten durchquerten Grundrahmenverknüpfungssegmenten(30_{i-1/i}) beinhaltet, wobei Inkrementierungsmittel zum Inkrementieren jedes dieser Felder vorgesehen sind, sobald ein entsprechendes Segment von einer Nachricht durchquert wird, die die Zeitstempelinformation (H) beinhaltet, die für diesen Knoten (N_{i,j,k,l}) bestimmt ist.

13. Servercluster (12) nach einem der Ansprüche 10 bis 12, Folgendes beinhaltend:
- ein erstes allgemeines Administrationsnetzwerk, das alle Knoten miteinander verknüpft, und
- mindestens ein zweites Verwaltungsnetzwerk für Berechnungsdaten, die dazu bestimmt sind, zwischen den Knoten ausgetauscht zu werden, das mindestens einen Teil der Knoten miteinander verknüpft,
wobei das Uhrenverknüpfungsnetzwerk ein zusätzliches Netzwerk ist, das sich von dem allgemeinen Administrationsnetzwerk und vom Verwaltungsnetzwerk für Berechnungsdaten unterscheidet, insbesondere ein Netzwerk, welches das HDLC-Protokoll anwendet.

## Claims

1. A method for synchronising a server cluster (12) comprising a plurality of nodes (N_{i,j,k,l}) each provided with an internal clock and interconnected with each other by a clock interconnection network, this clock interconnection network comprising a plurality of transmission segments (10_{i-1/i}, 20_{i,j-1/j}, 30_{k-1/k}, 40ₖ) connecting the nodes together, the method comprising the following steps:
- generation (100) of time-stamping information (H) by the internal clock of a source (N_{1,1,1,1}) chosen from the nodes (N_{i,j,k,l}) in the server cluster (12),
- transmission (110), by the transmission segments (10_{i-1/i}, 20_{i,j-1/j}, 30_{k-1/k}, 40ₖ) of the clock interconnection network, of this time-stamping information (H) to all the nodes (N_{i,j,k,l}) in the server cluster (12) from the source (N_{1,1,1,1}),
- adjustment (130) of the internal clock of each node (N_{i,j,k,l}) in the server cluster (12) from this time-stamping information (H),
**characterized in that** it further comprises the following steps:
- adjustment (110) of the time for transmitting time-stamping information (H) by each transmission segment (10_{i-1/i}, 20_{i,j-1/j}, 30_{k-1/k}, 40ₖ) to a constant value established for each transmission segment,
- on reception (120) of the time-stamping information (H) by any one of the nodes (N_{i,j,k,l}) in the server cluster (12), adjustment (130) of its internal clock from the time-stamping information (H) and information relating to the transmission segments passed through between the source (N_{1,1,1,1}) and this node (N_{i,j,k,l}).

2. The method for synchronising a server cluster (12) according to claim 1, wherein the adjustment (110) of the transmission time of any one of the transmission segments (10_{i-1/i}, 20_{i,j-1/j}, 30_{k-1/k}, 40ₖ) is effected by means of at least one delay line (LR1, LR2) adjusted so as to align the phase of a signal carrying the time-stamping information to the phase of a reference signal internal to the nodes oscillating at a frequency corresponding to a common oscillation frequency of all the internal clocks of the nodes (N_{i,j,k,l}) in the server cluster (12).

3. The method for synchronising a server cluster (12) according to claim 2, wherein the transmission time of any one of the transmission segments (10_{i-1/i}, 20_{i,j-1/j}, 30_{k-1/k}, 40ₖ) is adjusted (110) by means of two delay lines (LR1, LR2) slaved according to a phase difference (PHERR) measured between a data frame (FDATIN), intended to be supplied at the input of one (LR1) of the two delay lines in the direction of transmission of the time-stamping information, and an echo (BRDX) of this data frame, supplied at the output of the other one (LR2) of the two delay lines in the opposite direction of transmission of the time-stamping information.

4. The method for synchronising a server cluster (12) according to claim 3, wherein the slaving values (FWDDLY, BKWDLY) of the two delay lines (LR1, LR2) of any one of the transmission segments (10_{i-1/i}, 20_{i,j-1/j}, 30_{k-1/k}, 40ₖ) are determined differently from each other according also to a phase difference (DIFF-PHERR) measured at the output of this transmission segment in the direction of transmission of the time-stamping information between the data frame (FRXD) supplied as an output of one (LR1) of the two delay lines and a predetermined local phase reference (PHREF).

5. The method for synchronising a server cluster (12) according to any one of claims 1 to 4, wherein the transmission time value established for each transmission segment (10_{i-1/i}, 20_{i,j-1/j}, 30_{k-1/k}, 40ₖ) is the same common maximum value established for all the transmission segments.

6. The method for synchronising a server cluster (12) according to claim 5, wherein said same common maximum value established for all the transmission segments (10_{i-1/i}, 20_{i,j-1/j}, 30_{k-1/k}, 40ₖ) is obtained by an adjustment of the delay lines (LR) such that the phase of a signal carrying the time-stamping information is aligned on the rising or falling edges of the reference signal, the latter oscillating about an intermediate frequency, for example 1 MHz.

7. The method for synchronising a server cluster (12) according to claim 5 or 6, wherein the information relating to the transmission segments (10_{i-1/i}, 20_{i,j-1/j}, 30_{k-1/k}, 40ₖ) passed through between the source (N_{1,1,1,1}) and any one of the nodes (N_{i,j,k,l}) in the server cluster (12) for transmitting the time-stamping information comprises the number of transmission segments passed through between the source and this node.

8. The method for synchronising a server cluster (12) according to any one of claims 1 to 7, wherein a plurality of nodes (N_{i,j,k,l}), referred to as computing nodes, are able to execute application program instructions and operating system instructions, each of these computing nodes being programmed to execute the operating system instructions in predetermined time widndows, these executions in these predetermined time windows being triggered by the internal clock of each computing node (N_{i,j,k,l}).

9. The method for synchronising a server cluster (12) according to claim 8, wherein the predetermined time windows are the same for all the computing nodes (N_{i,j,k,l}).

10. A server cluster (12) comprising a plurality of nodes (N_{i,j,k,l}) each provided with an internal clock and interconnected with each other by a clock interconnection network, this clock interconnection network comprising a plurality of transmission segments (10_{i-1/i}, 20_{i,j-1/j}, 30_{k-1/k}, 40ₖ) connecting the nodes together, the server cluster comprising:
- a source (N_{1,1,1,1}), chosen from nodes (N_{i,j,k,l}) in the server cluster (12), comprising means for generating time-stamping information (H) by means of its internal clock,
- means for the transmission, by the transmission segments (10_{i-1/i}, 20_{i,j-i/j}, 30_{k-1/k}, 40ₖ) of the clock interconnection network, of this time-stamping information (H) to all the nodes (N_{i,j,k,l}) in the server cluster (12) from the source (N_{1,1,1,1}),
- means for adjusting the internal clock of each node (N_{i,j,k,l}) in the server cluster (12) from this time-stamping information (H),
**characterized in that** it further comprises means (LR) for adjusting the time for transmitting the time-stamping information (H) by each transmission segment (10_{i-1/i}, 20_{i,j-1/j}, 30_{k-1/k}, 40ₖ) to a constant value established for each transmission segment, and **in that** the internal clock adjustment means are designed to adjust the internal clock of each node (N_{i,j,k,l}) in the server cluster (12) from also information relating to the transmission segments passed through between the source and this node.

11. The server cluster (12) according to claim 10, wherein:
- each node (N_{i,j,k,l}) is included in a chassis (C_{i,j,k}), itself including in a computer rack (B_{i,j}), itself included in a row (Ri) of computer racks, the server cluster (12) comprising a plurality of rows (R1, ... Ri, ... RI) of computer racks,
- the clock interconnection network comprises a plurality of segments interconnecting the rows together (10_{i-1/i}), segments for interconnecting together computer racks in the same row (20_{i,j-1/j}), segments for interconnecting together chassis in the same computer rack (30_{k-1/k}) and segments for interconnecting together nodes in the same chassis (40ₖ), and
- the means for transmitting time-stamping information (H) are able to transmit to each node (N_{i,j,k,l}) in the server cluster (12), with this time-stamping information, at least one item of information relating to the number of segments for interconnecting rows (10_{i-1/i}) passed through between the source and the node, the number of computer rack interconnection segments (20_{i-1/i}) passed through between the source and this node and the number of chassis interconnection segments (30_{i-1/i}) passed through between the source and this node.

12. The server cluster (12) according to claim 11, wherein, the information relating to the transmission segments (10_{i-1/i}, 20_{i,j-1/j}, 30_{k-1/k}, 40ₖ) passed through between the source (N_{1,1,1,1}) and any one of the nodes (N_{i,j,k,l}) in the server cluster (12) comprising at least one field indicating the number of segment interconnecting rows (10_{i-1/i}) passed through between the source and this node, a field indicating the number of segments interconnecting computer racks (20_{i-1/i}) passed through between the source and this node and a field indicating the number of segments interconnecting chassis (30_{i-1/i}) passed through between the source and this node, incrementation means are provided for incrementing each of these fields as soon as a corresponding segment is passed through by a message including the time-stamping information (H) intended for this node (N_{i,j,k,l}).

13. The server cluster (12) according to any one of claims 10 to 12, comprising:
- a first general administration network interconnecting all the nodes together, and
- at least a second network managing computing data intended to be exchanged between the nodes, interconnecting at least some of the nodes together,
wherein said clock interconnection network is a supplementary network, distinct from the general administration network and the computing data management network, in particular a network implementing the HDLC protocol.
